# FASCICULE DE BREVET EUROPEEN

(11) **EP 3 206 773 B1**
(45) Date de publication et mention de la délivrance du brevet: **27.03.2019**
(21) Numéro de dépôt: 15774613.2
(22) Date de dépôt: 02.10.2015
(51) Int. Cl.: B01D 35/26, F02M 37/08, F02M 37/22

(54) **SYSTEME DE FILTRAGE POUR CARBURANT AVEC POMPE INTEGREE**
KRAFTSTOFFFILTERSYSTEM MIT INTEGRIERTER PUMPE
FUEL FILTERSYSTEM WITH INTEGRATED PUMP

(30) Priorité: 15.10.2014 FR 1459871
(43) Date de publication de la demande: 23.08.2017
(73) Titulaire: Delphi Automotive Systems Luxembourg SA, 4940 Bascharage (LU)
(72) Inventeur: PERINET, Jean-François, F-54260 Fresnois-la-Montagne (FR); ROBIN, Jean-François, F-57525 Talange (FR); BEYER, Sharon, E., Grand Blanc, MI 48439 (US); CREMER, Hugues, B-6600 Bastogne (BE)
(74) Mandataire: Delphi France SAS
(86) Numéro de dépôt international: PCT/EP2015/072857
(87) Numéro de publication internationale: WO 2016/058850

(56) Documents cités:
- DE-A1- 19 917 349
- US-A- 5 915 926
- US-A1- 2004 118 764
- US-B1- 6 311 725

## Description

### INTRODUCTION

La présente invention concerne généralement le domaine des filtres à carburant pour moteurs à combustion interne, et plus spécifiquement un système de filtrage pour carburant avec pompe intégrée tel qu'employé sur les véhicules utilitaires lourds (camions, engins de chantier, etc.).

### ETAT DE LA TECHNIQUE

Face aux exigences des réglementations concernant les émissions polluantes, les constructeurs et équipementiers portent une attention continue aux performances des moteurs, et notamment de leur système d'injection.

Dans ce contexte, il a été proposé pour les véhicules utilitaires lourds de remplacer les pompes à carburant mécaniques assurant le transfert du carburant depuis le réservoir vers le moteur, par des pompes électriques.

Il a notamment été proposé de combiner la pompe à carburant électrique avec le filtre à carburant.

La société Parker, par exemple, commercialise un système de filtrage (en ligne) pour carburant avec pompe intégrée. Il comprend une partie de tête à laquelle sont fixées deux (ou plusieurs) unités filtrantes. La tête de filtre comprend un logement pour accueillir une pompe électrique. Dans la solution choisie par Parker le boitier de la pompe est combiné avec le couvercle fermant le logement, cet ensemble accueillant donc dans une même enveloppe le moteur électrique, la section de pompage et l'électronique de contrôle. Si une telle solution peut paraître intéressant sur le plan de l'intégration, elle est onéreuse en termes de développement, et risquée car l'électronique se trouve à l'intérieur du logement où circule le carburant.

Le US 2004/118764 décrit un autre système de filtrage pour carburant avec pompe intégrée.

### OBJET DE L'INVENTION

L'objet de la présente invention est de fournir un système de filtrage pour carburant avec pompe intégrée de conception simple et peu onéreuse.

### DESCRIPTION GENERALE DE L'INVENTION

Avec cet objectif en tête, l'invention propose un système de filtrage pour carburant avec pompe intégrée comprenant une partie de tête adaptée pour coopérer avec au moins un module de filtration (généralement amovible). La partie de tête comprend un logement, fermé par un couvercle, accueillant une pompe à carburant électrique destinée à envoyer le carburant depuis un réservoir vers un moteur, le logement comprenant dans sa paroi un orifice d'entrée et un orifice de sortie de carburant espacés selon un axe longitudinale du logement.

Selon un aspect important de l'invention, la pompe est agencée dans une pièce support fixée au couvercle, la pompe formant un module indépendant ayant un boitier comprenant un moteur électrique couplé à une section de pompage agencée dans un passage interne de carburant s'étendant entre un orifice d'entrée et de sortie, espacés selon l'axe du logement. Des moyens d'étanchéité annulaires sont prévus aux interfaces pompe-pièce support et pièce support-logement, et positionnés axialement de sorte à former dans le logement une chambre basse pression du côté des orifices d'entrée de la pompe et du logement, et une chambre haute pression du côté des orifices de sortie de la pompe et du logement.

La présente invention propose donc un système de filtrage basé sur une pièce support qui permet le montage/fixation de la pompe dans la partie de tête du système de filtrage, sans nécessiter de développements particuliers en termes de pompe ou d'intégration des composants. En particulier, la pièce support permet d'utiliser des pompes standard telles que les pompes classiquement utilisées dans les réservoirs à carburant des automobiles (dites « in-tank pump »).

L'ensemble pompe - couvercle - pièce support forme une unité simple et compacte qui peut être livrée telle quelle, prête à être mise en place.

Comme on le comprendra, la possibilité d'utiliser des pompes standard maintenues par une pièce support en plastique confère une grande flexibilité et adaptabilité au système.

La commande de la pompe (de son moteur) se fait simplement au moyen d'un boitier de commande électrique placé à l'extérieur du logement, soit à distance, soit combiné au couvercle. Pompe et boitier de commande sont ainsi des entités indépendantes qui peuvent être réparées séparément.

De préférence, la pièce support comprend une section de montage fixée au couvercle, se poursuivant par une section de support dans laquelle est placée la pompe. Un premier joint annulaire est positionné dans la section de support pour coopérer avec le boitier de la pompe. Un deuxième joint annulaire est positionné à l'interface section de support-logement.

Selon une variante, la pompe a un boitier cylindrique et les orifices d'entrée et sortie sont positionnés à proximité des extrémités de la pompe. La pièce support a une forme générale tubulaire partiellement ajourée sur la section de montage, la section de support ayant une forme de manchon cylindrique ajusté à la section transversale de la pompe. Ainsi la pompe est montée dans la partie de la pièce support espacée du couvercle, la section de montage étant au moins étant ajourée pour le passage du carburant.

De préférence, la pièce support comprend un embout monté sur l'extrémité de la section de support pour maintenir la pompe, ledit embout portant le premier joint annulaire. En pratique, la pompe est installée dans la section de support et l'embout est mis en place sur l'extrémité de celle ci, le premier joint annulaire étant positionné dans l'embout pour établir un contact annulaire avec le boitier de la pompe, formant l'étanchéité pompe/embout.

En outre, l'embout porte avantageusement le deuxième joint annulaire qui est monté à la périphérie de celui-ci. Ainsi l'embout, avec les deux joints annulaires, sert de pièce de fixation pour la pompe, au centrage dans le logement et assure une étanchéité annulaire entre le boitier de pompe et la paroi interne du logement, réalisant la séparation entre chambre basse pression et haute pression.

L'embout, qui peut prend une forme générale de bouchon, peut être fixé sur la section de support par encliquetage ou tout autre moyen approprié. Du côté du couvercle également, la fixation de la partie de montage au couvercle peut se faire par encliquetage ou tout autre moyen approprié (par exemple vissage, collage, soudage).

La présente invention repose donc sur un design qui a de nombreux avantages :
- un design modulaire permettant d'adapter des composants communs (pompe et boitier de commande) à des applications très spécifiques de systèmes de filtration.
- l'intégration de la pompe dans le filtre élimine le recours à des connections hydraulique tels qu'elles existent dans certains systèmes de filtrage conventionnels.
- l'embout, avantageusement muni d'une membrane filtrante, assure la séparation des pression de fuel en filtrant les débris résiduels.
- le boitier de commande est à l'extérieur du logement dans lequel est placé la pompe, ce qui simplifie le design du système et se traduit par des coûts réduits et une amélioration en termes de sécurité et fiabilité.
- la pièce de support facilite le montage de la pompe dans le logement, et notamment le centrage. La pièce support ne joue le rôle de support structurel qu'à l'extérieur du logement.
- lorsque le couvercle est intégré au boitier électrique, le flux de carburant dans le logement de la partie de tête permet de refroidir en partie l'électronique du boitier.

Le présent système de filtrage a été particulièrement développé pour les moteurs diesel de véhicules lourds mais peut être adapté pour d'autres moteurs dans des applications diverses.

### DESCRIPTION A L'AIDE DES FIGURES

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig.1 : une vue d'une variante du présent système de filtrage pour carburant ;
Fig.2 : est une vue en perspective de l'ensemble couvercle - pièce support et pompe qui sont disposés dans le logement de la partie de tête du système de filtrage, l'ensemble étant montré raccordé à un boitier de commande électrique ;
Fig.3 : est une vue en coupe longitudinale de l'ensemble couvercle - pièce support et pompe de la figure 2 ; et
Fig. 4 : représente un autre mode de réalisation du système de filtrage, dans lequel le couvercle est intégré dans un boitier de commande électrique.

Sur les figures, les mêmes signes de référence désignent des éléments identiques ou similaires.

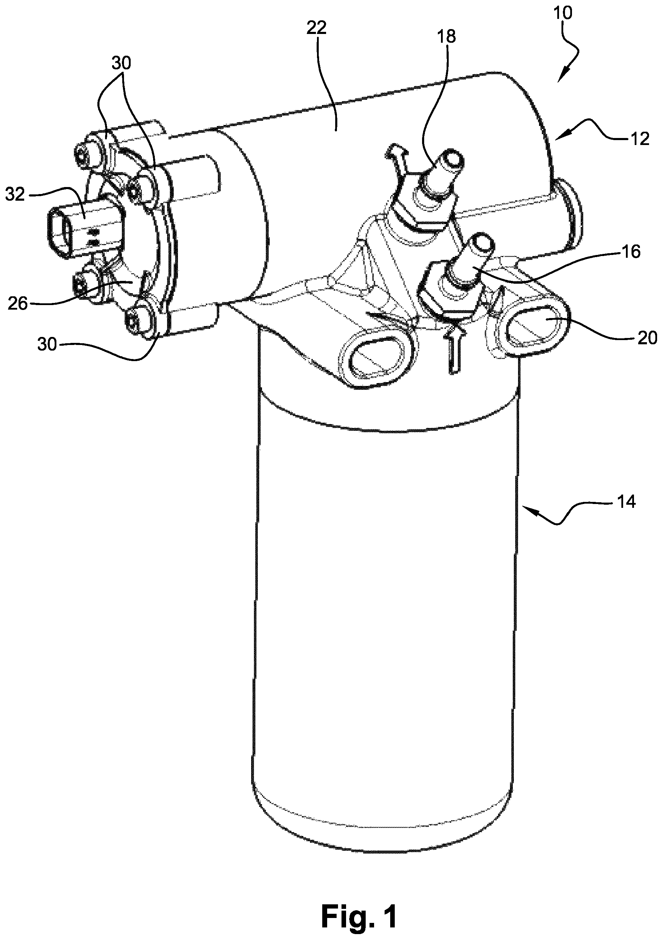

La figure 1 illustre une première exécution du présent système de filtrage 10 pour carburant avec pompe intégrée. Le système de filtrage 10 comprend une partie de tête 12 sur laquelle est montée un module filtrant 14. Il est entendu que la partie de tête 12 peut être conçue pour accueillir deux ou plusieurs modules filtrants 14. Le système de filtrage 10 est généralement placé à proximité du moteur dans des véhicules tels que camions, engins de chantier etc, afin de filtrer le carburant (diesel) qui est acheminé vers le moteur à travers une conduite de carburant. Comme on le sait, un tel système de filtrage vise à éliminer des particules/impuretés portées par le carburant, et préférablement également à séparer l'eau du carburant, avant que le carburant n'arrive vers la pompe à carburant du moteur (par exemple dans le système d'injection à rampe commune). Une pompe électrique est intégrée à la partie de tête 12, ce qui permet le pompage du carburant dès la mise du contact.

La partie de tête 12 comprend un circuit interne de carburant définissant la circulation du carburant entre le ou les modules de filtration 14 et la pompe. Sur la figure 1, le signe de référence 16 indique un connecteur d'entrée de carburant par lequel le carburant arrive du réservoir (non montré), le connecteur de sortie vers le moteur étant désigné 18. Des pattes de fixation 20 permettent le montage du filtre 10 dans le moteur. La partie de tête 12 peut être une fonderie en métal ou réalisée par moulage plastique ou de manière générale en tout matériau approprié.

Le module de filtration 14, qui comprend au moins une cartouche filtrante, est fixé à la partie de tête 12 de manière amovible, par exemple par vissage ou emboitement élastique. Selon le principe de fonctionnement et le degré de filtration requis, la partie de tête coopère avec 1, 2 ou plusieurs modules de filtrations, à travers lesquels le carburant circule selon un chemin prédéterminé et est mu grâce à la pompe. Les principes de filtration dans ce type de système de filtrage sont bien connus et ne seront donc pas explicités davantage.

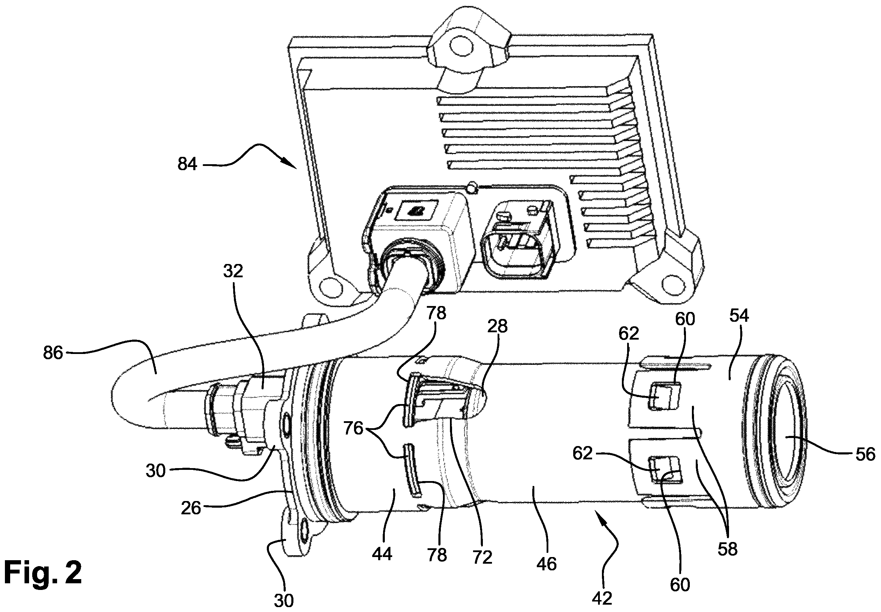

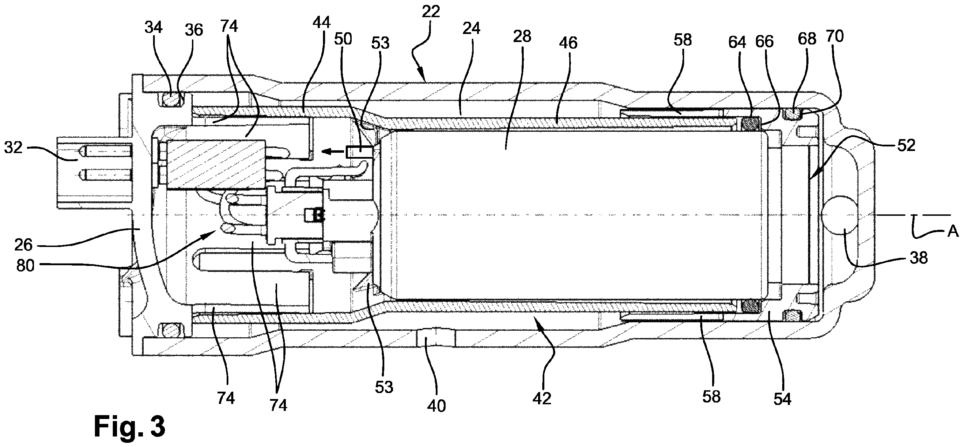

En se référant aux figures 2 et 3, la partie de tête 12 comprend une partie formant boitier 22 définissant un logement 24 qui est fermé par un couvercle 26 et qui accueille la pompe à carburant électrique 28. Le couvercle 26 est fixé à la partie de tête 12, par exemple par vissage au moyen de vis insérées dans des oreilles 30 périphériques du couvercle. Le couvercle 26 comprend en outre un connecteur 32 ou passage de câbles étanche pour alimenter la pompe 28. Un joint annulaire 34, monté dans une gorge 36 périphérique du couvercle 26, assure une fermeture étanche du logement 24. Le carburant pénètre dans le logement 24 par un orifice 38 à travers la paroi de celui-ci, et en ressort par un orifice de sortie 40. Comme on le voit bien sur la figure 3, le logement 24 a une forme générale cylindrique s'étendant selon un axe A. Les orifices d'entrée 38 et sortie 40 du carburant sont espacés axialement.

On appréciera que la pompe 28 est montée dans le logement 24 au moyen d'une pièce support, généralement indiquée 42, fixée au couvercle 26. La pièce support 42 est de forme générale tubulaire et comprend une section de montage 44, fixée au couvercle 26, solidaire d'une section de support 46 qui reçoit la pompe 28.

Un avantage important de l'emploi d'une telle pièce support 42 est qu'elle permet l'intégration de pompes standard dans la partie de tête, sans modification de la pompe ou de son boitier. Par pompe standard on entend un module indépendant comprenant, dans un même boitier, un moteur électrique (par exemple du type pas-à-pas sans balais) couplé à une section de pompage, la section de pompage étant agencée dans un passage interne de carburant de la pompe s'étendant entre un orifice d'entrée et de sortie de pompe. En particulier, on pourra utiliser ici des pompes à carburant électriques telles que classiquement employées dans les réservoirs de voitures.

En se référant plus spécifiquement à la figure 3, la pompe 28 est placée dans la section de support 28, laquelle a une forme de manchon cylindrique dont le diamètre interne est ajusté au diamètre extérieur du boiter de la pompe 28. La pompe 28 est orientée avec sa sortie 50 tournée vers le couvercle 26, alors que l'entrée 52 est du côté du fond du logement 24. Des butées axiales 53 évitent le déplacement de la pompe 28 vers le couvercle 26.

Des moyens d'étanchéité annulaires sont prévus aux interfaces pompe-pièce support et pièce support-logement ; ils sont positionnés axialement de sorte à former dans le logement une chambre basse pression du côté des orifices d'entrée de la pompe 52 et du logement 38, et une chambre haute pression du côté des orifices de sortie de la pompe 50 et du logement 40. Dans la variante, ces moyens d'étanchéité sont prévus sur un embout 54 monté sur l'extrémité de la section de support 46 de la pièce support 42, qui vient fermer cette extrémité et maintient la pompe 28. L'embout 54 peut avoir une forme de bouchon ou de douille, dont la face d'extrémité comprend une ouverture 56 pour le carburant, préférablement munie d'une membrane filtrante (non montrée). L'embout 54 est ici fixé par encliquetage sur le manchon de support. A cet effet, l'embout comprend une série de languettes élastiques 58 axiales, distribuées circonférentiellement, s'étendant à partir du bord de l'embout. Ces languettes 58 présentent chacune des ouvertures rectangulaires 60 qui coopèrent avec des saillies 62 à la périphérie de la section de support 46, également de forme rectangulaire et ayant un profil incliné. Les saillies 62 viennent donc s'engager dans les ouvertures des languettes, l'embout 54 se trouvant ainsi bloqué axialement et en rotation sur la pièce support 42. D'autres formes et types d'encliquetage peuvent être employés, voir d'autres moyens de fixation tel que vissage ou soudage.

Un premier joint annulaire 64 est monté à l'intérieur de l'embout 54, contre un épaulement 66, et constitue donc une première étanchéité à l'interface boitier de pompe / embout. Un deuxième joint annulaire 68 est monté dans une gorge périphérique 70 de l'embout 54, et constitue une deuxième étanchéité à l'interface embout / logement. Le positionnement de ces joints annulaires 64, 68 permet donc de former deux chambres dans le logement 24 :
- une chambre basse pression qui comprend les orifices d'entrée 52 et 38, respectifs de la pompe et du logement
- une chambre haute pression, du côté du couvercle, qui communique avec les orifices de sortie 50 et 40 respectifs de la pompe et du logement.

Le carburant arrive donc dans le logement 24 du côté basse pression, où il est aspiré par la pompe 52, et ressort par l'orifice de sortie 50 dans la chambre haute pression, traversant une ou plusieurs ouvertures 72 dans la pièce support 42, et quittant la chambre par l'orifice de sortie 40.

Comme pour la fixation de l'embout 54, la fixation de la pièce support 42 au couvercle 26 se fait de préférence par encliquetage. Le couvercle 26 comprend une série de languettes axiales 74 avec à leurs extrémités des nervures radiales 76 venant s'engager dans des ouvertures 78 prévues dans la section de montage 44. Languettes 74 et ouvertures 78 coopérèrent ainsi pour un blocage axial et en rotation.

La pièce support 42, avec l'embout 54, sont avantageusement fabriqués en matière plastique adaptée pour résister au carburant, tel que par exemple polyoxyméthylène ou polyformaldéhyde. Le couvercle 26 peut également être en plastique. De tels composants peuvent être facilement produits en différentes tailles pour s'adapter à diverses dimensions de pompes et géométries de logement.

Dans la variante des figures 1 à 3, le couvercle 26 porte uniquement le connecteur électrique 32 assurant l'interface extérieur/intérieur ; la connexion électrique de la pompe se faisant par un ensemble de câbles 80.

La commande de la pompe se fait par un boitier de commande 84 électrique situé à distance, raccordé au connecteur 32 par un faisceau de câbles 86.

En pratique, l'ensemble couvercle - pièce support - pompe constitue une unité compacte facile à manipuler. La forme cylindrique facilite le montage/centrage de l'ensemble dans la cavité. L'assemblage proposé participe également à un amortissement des vibrations.

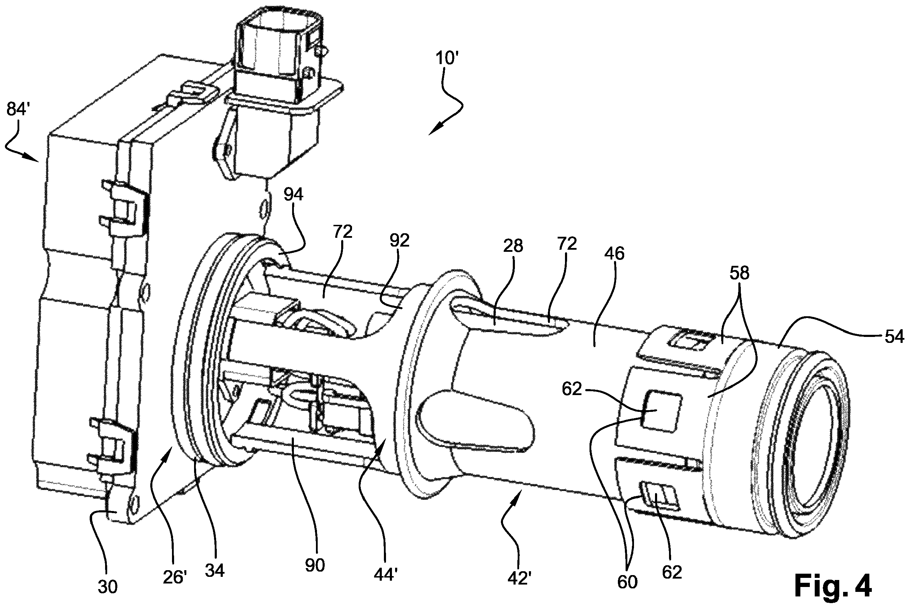

La figure 4 illustre une deuxième variante 10' qui se distingue de la précédente par le design de la pièce support 42', toutefois sans en changer les fonctionnalités. La différence se situe essentiellement au niveau de la section de montage 44', qui est ici formée par des bras axiaux 90 s'étendant depuis un manchon 92, et venant s'encliqueter sur un bourrelet annulaire 94 de centrage du couvercle 26', lequel bourrelet 92 porte le joint d'étanchéité 34.

On notera aussi que le couvercle 26' fait partie intégrante du boitier de commande 84'. Dans ce cas, le couvercle 26' est de préférence réalisé sous la forme d'une plaque métallique (par ex. en aluminium) pour favoriser le refroidissement de l'électronique par le carburant circulant dans le logement 24. Bien que sur la Fig.4 le boitier 84' est dans une configuration perpendiculaire à l'axe A, d'autres configurations du boitier peuvent être envisagées.

## Revendications

1. Système de filtrage pour carburant avec pompe intégrée, ledit système comprenant :
une partie de tête (12) adaptée pour coopérer avec au moins un module de filtration (14), ladite partie de tête comprenant un logement (24), fermé par un couvercle (26), accueillant une pompe à carburant électrique (28) destinée à envoyer le carburant depuis un réservoir vers un moteur, ledit logement (24) comprenant dans sa paroi un orifice d'entrée (38) et un orifice de sortie (40) de carburant espacés selon un axe longitudinal (A) du logement ;
**caractérisé en ce que**
ladite pompe (28) est agencée dans une pièce support (42) fixée au couvercle (26), ladite pompe formant un module indépendant ayant un boitier comprenant un moteur électrique couplé à une section de pompage agencée dans un passage interne de carburant s'étendant entre un orifice d'entrée (52) et de sortie (50), espacés selon ledit axe ;
des moyens d'étanchéité annulaires (64, 68) sont prévus aux interfaces pompe-pièce support et pièce support-logement, et positionnés axialement de sorte à former dans le logement (24) une chambre basse pression du côté des orifices d'entrée (38, 52) de la pompe et du logement, et une chambre haute pression du côté des orifices de sortie (40, 50) de la pompe et du logement.

2. Système de filtrage selon la revendication 1, **caractérisé en ce que**
la pièce support (42) comprend une section de montage (44) fixée au couvercle (26), se poursuivant par une section de support (46) dans laquelle est placée la pompe (28) ;
un premier joint annulaire (64) est positionné dans ladite pièce support (42) pour coopérer avec le boitier de la pompe ;
un deuxième joint annulaire (68) est positionné à l'interface section de support-logement.

3. Système de filtrage selon la revendication 2, **caractérisé en ce que**
la pompe a un boitier cylindrique et les orifices d'entrée et sortie sont positionnés à proximité des extrémités de la pompe ;
la pièce support (42) a une forme générale tubulaire partiellement ajourée sur la section de montage (44), la section de support (46) ayant une forme de manchon cylindrique ajusté à la section transversale de la pompe (28).

4. Système de filtrage selon la revendication 2 ou 3, **caractérisé en ce que** la pièce support (42) comprend un embout (54) monté sur l'extrémité de la section de support (46) pour maintenir la pompe, ledit embout (54) portant le premier joint annulaire (64).

5. Système de filtrage selon la revendication 4, **caractérisé en ce que** le deuxième joint annulaire (68) est monté à la périphérie dudit embout (54).

6. Système de filtrage selon la revendication 4 ou 5, **caractérisé en ce que** l'embout (54) est fixé sur la section de support (46) par encliquetage.

7. Système de filtrage selon l'une quelconque des revendications précédentes, **caractérisé en ce que** la pièce support (42) est fixée au couvercle (26) par encliquetage.

8. Système de filtrage selon l'une quelconque des revendications précédentes, **caractérisé en ce que** le couvercle est intégré à un boitier de commande électrique de la pompe.

## Patentansprüche

1. Kraftstofffiltersystem mit integrierter Pumpe, wobei das System enthält:
ein Kopfteil (12), das dazu geeignet ist, mit zumindest einem Filtermodul (14) zusammenzuwirken, wobei das Kopfteil eine Aufnahme (24) aufweist, die von einem Deckel (26) verschlossen wird und eine elektrische Kraftstoffpumpe (28) aufnimmt, die dazu bestimmt ist, den Kraftstoff von einem Kraftstofftank zu einem Motor zu leiten, wobei die Aufnahme (24) in ihrer Wandung eine Einlassöffnung (38) und eine Auslassöffnung (40) für Kraftstoff enthält, die entlang einer Längsachse (A) der Aufnahme beabstandet sind;
**dadurch gekennzeichnet, dass**
die Pumpe (28) in einem Tragteil (42) angeordnet ist, das an den Deckel (26) befestigt ist, wobei die Pumpe ein unabhängiges Modul bildet, das ein Gehäuse mit einem Elektromotor bildet, der mit einem Pumpabschnitt gekoppelt ist, der in einem inneren Kraftstoffdurchlass angeordnet ist, der sich zwischen einer Einlassöffnung (52) und einer Auslassöffnung (50) erstreckt, die entlang der Achse beabstandet sind;
ringförmige Dichtungseinrichtungen (64, 68) an den Schnittstellen Pumpe/Tragteil und Tragteil/Aufnahme vorgesehen und axial so positioniert sind, dass sie in der Aufnahme (24) eine Niederdruckkammer auf der Seite der Einlassöffnungen (38, 52) der Pumpe und der Aufnahme sowie eine Hochdruckkammer auf der Seite der Auslassöffnungen (40, 50) der Pumpe und der Aufnahme bilden.

2. Filtersystem nach Anspruch 1, **dadurch gekennzeichnet, dass**
das Tragteil (42) einen Lagerabschnitt (44) enthält, der an den Deckel (26) befestigt ist und sich in einem Tragabschnitt (46) fortsetzt, in welchem die Pumpe (28) angeordnet ist;
ein erster Dichtungsring (64) in dem Tragteil (42) zum Zusammenwirken mit dem Pumpengehäuse positioniert ist;
ein zweiter Dichtungsring (68) an der Schnittstelle Tragabschnitt/Aufnahme positioniert ist.

3. Filtersystem nach Anspruch 2, **dadurch gekennzeichnet, dass**
die Pumpe ein zylindrisches Gehäuse hat und die Einlass- und Auslassöffnungen in der Nähe der Enden der Pumpe positioniert sind;
das Tragteil (42) eine rohrförmige Gestalt hat, die an dem Lagerabschnitt (44) teilweise durchbrochen ist, wobei der Tragabschnitt (46) eine zylindrische Hülsenform hat, die an den Querschnitt der Pumpe (28) angepasst ist.

4. Filtersystem nach Anspruch 2 oder 3, **dadurch gekennzeichnet, dass** das Tragteil (42) ein Ansatzstück (54) aufweist, das am Ende des Tragabschnitts (46) angebracht ist, um die Pumpe zu halten, wobei das Ansatzstück (54) den ersten Dichtungsring (64) trägt.

5. Filtersystem nach Anspruch 4, **dadurch gekennzeichnet, dass** der zweite Dichtungsring (68) am Umfang des Ansatzstücks (54) angebracht ist.

6. Filtersystem nach Anspruch 4 oder 5, **dadurch gekennzeichnet, dass** das Ansatzstück (54) durch Einschnappen an den Tragabschnitt (46) befestigt ist.

7. Filtersystem nach einem der vorangehenden Ansprüche, **dadurch gekennzeichnet, dass** das Tragteil (42) durch Einschnappen an den Deckel (26) befestigt ist.

8. Filtersystem nach einem der vorangehenden Ansprüche, **dadurch gekennzeichnet, dass** der Deckel einem Gehäuse zum elektrischen Steuern der Pumpe integriert ist.

## Claims

1. Fuel filter system with integrated pump, said system comprising:
a head part (12) adapted to cooperate with at least one filter module (14), said head part comprising a housing (24) closed by a cover (26) and receiving an electric fuel pump (28) which is intended to deliver fuel from a tank to an engine, said housing (24) comprising in its wall a fuel inlet orifice (38) and a fuel outlet orifice (40) spaced along a longitudinal axis of the housing (A);
**characterized in that**
said pump (28) is arranged in a support piece (42) fixed to the cover (26), said pump forming an independent module with a housing comprising an electric motor coupled to a pumping portion which is arranged in an internal fuel passage extending between an inlet orifice (52) and an outlet orifice (50) spaced along said axis;
annular sealing means (64, 68) are provided at the interfaces between the pump and the support piece and between the support piece and the housing, and positioned axially so as to form in the housing (24) a low-pressure chamber on the side of the inlet orifices (38, 52) of the pump and housing, and a high-pressure chamber on the side of the outlet orifices (40, 50) of the pump and housing.

2. Filter system according to Claim 1, **characterized in that**
the support piece (42) comprises a mounting portion (44) fixed to the cover (26) and extended by a support portion (46) in which the pump (28) is placed;
a first annular seal (64) is positioned in said support piece (42) to cooperate with the pump housing;
a second annular seal (68) is positioned at the interface between the support portion and the housing.

3. Filter system according to Claim 2, **characterized in that**
the pump has a cylindrical housing and the inlet and outlet orifices are positioned close to the ends of the pump;
the support piece (42) has a generally tubular form, partially open at the mounting portion (44), wherein the support portion (46) has the form of a cylindrical sleeve adapted to the cross-section of the pump (28).

4. Filter system according to Claim 2 or 3, **characterized in that** the support piece (42) comprises a socket (54) mounted on the end of the support portion (46) for holding the pump, said socket (54) carrying the first annular seal (64).

5. Filter system according to Claim 4, **characterized in that** the second annular seal (68) is mounted on the periphery of said socket (54).

6. Filter system according to Claim 4 or 5, **characterized in that** the socket (54) is fixed to the support portion (46) by clip fixing.

7. Filter system according to any of the preceding Claims, **characterized in that** the support piece (42) is fixed to the cover (26) by clip fixing.

8. Filter system according to any of the preceding Claims, **characterized in that** the cover is integrated in a housing of the electric control system of the pump.
